# EUROPÄISCHE PATENTANMELDUNG

(11) **EP 2 080 665 A2**
(43) Veröffentlichungstag der Anmeldung: **22.07.2009**
(21) Anmeldenummer: 09100039.8
(22) Anmeldetag: 14.01.2009
(51) Int. Cl.: B60Q 1/04, B60Q 1/26

(54) **Befestigungsvorrichtung für einen Scheinwerfer**

(30) Priorität: 15.01.2008 DE 102008004309
(71) Anmelder: Plastal GmbH, 91781 Weissenburg (DE)
(72) Erfinder: Täuber, Stefan, 96148, Baunach (DE); Knothe, Dr. Jürgen, 71093, Weil im Schönbuch (DE); Kachel, Fred, 71083, Herrenberg (DE)
(74) Vertreter: Uppena, Franz

(57) **Zusammenfassung**

Die Erfindung betrifft ein Trägerbauteil (1), insbesondere ein Lufteinlassgitter mit Lufteinlassöffnungen (2) und Befestigungsvorrichtung für Scheinwerfer (6) und/oder Funktionsleuchten, insbesondere Nebelscheinwerfer und/oder Richtungsanzeiger eines Fahrzeuges, wobei das Trägerbauteil (1) aus Polypropylen gebildet ist. Dadurch ist eine kostengünstige Herstellung des Trägerbauteils (1) realisiert sowie ein Gesamtgewicht, beispielsweise einer Stoßfängereinheit (9), an welcher das Trägerbauteil (1) befestigt ist, reduziert. Darüber hinaus ist der Kunststoff Polypropylen einfärbbar, wodurch eine aufwändige Lackierung nicht erforderlich ist.

## Beschreibung

Die Erfindung betrifft eine Befestigungsvorrichtung für einen Scheinwerfer und/oder eine Funktionsleuchte, insbesondere Nebelscheinwerfer und/oder Richtungsanzeiger eines Fahrzeuges, umfassend ein Trägerbauteil, insbesondere ein Lufteinlassgitter.

Üblicherweise sind Trägerbauteile, z. B. ein Lufteinlassgitter mit Lufteinlassöffnungen, zur Aufnahme eines Scheinwerfers und/oder einer Funktionsleuchte geeignet und im Allgemeinen aus hochwertigen und kostenintensiven Kunststoffen, wie zum Beispiel Polybutylenterphthalat (PBT), Polycarbonat (PC) oder Acrylnitril-Butadin-Styrol (ABS) gebildet und geformt.

Der Erfindung liegt die Aufgabe zugrunde eine Befestigungsvorrichtung für einen Scheinwerfer und/oder eine Funktionsleuchte anzugeben, welche einfach und kostengünstig herstellbar ist.

Die Aufgabe wird erfindungsgemäß durch die in Anspruch 1 angegebenen Merkmale gelöst. Vorteilhafte Weiterbildungen der Erfindung sind Gegenstand der Unteransprüche.

Die Erfindung betrifft eine Befestigungsvorrichtung für einen Scheinwerfer und/oder eine Funktionsleuchte. Die Befestigungsvorrichtung umfasst üblicherweise ein Trägerbauteil zur Aufnahme und Halterung des Scheinwerfers bzw. der Funktionsleuchte. Als Trägerbauteil dient beispielsweise ein Lufteinlassgitter. Erfindungsgemäß ist das Trägerbauteil aus dem Kunststoff Polypropylen gebildet.

Durch den Einsatz eines solchen aus Polypropylen gebildeten Trägerbauteils ist das Gewicht beispielsweise einer das Trägerbauteil aufnehmenden Karosserieeinheit, wie eine Stoßfängereinheit, vorteilhaft reduziert. Darüber hinaus ist das Trägerbauteil aus Polypropylen im Vergleich zu Trägerbauteilen anderer Kunststoffarten kostengünstig und einfach herstellbar.

Polypropylen zeichnet sich insbesondere dadurch aus, dass eine hinreichend gute Steifigkeit, Härte und Festigkeit für das Trägerbauteil gegeben ist. Ferner ist Polypropylen gegenüber organischen Lösungsmitteln und Fetten weitgehend beständig.

Das Trägerbauteil aus Polypropylen lässt sich bevorzugt unter anderem mittels eines Spritzgießverfahrens oder einem anderen geeigneten thermischen Formgebungsverfahren herstellen. Hierdurch kann das Trägerbauteil als ein Formbauteil, insbesondere ein Spritzguss-, Blasform- oder Schaumformteil eine zu der Innenkontur der aufnehmenden Karosserieeinheit korrespondierende Außenkontur aufweisen.

Ausführungsbeispiele der Erfindung werden anhand von Zeichnungen näher erläutert.

Dabei zeigen:
- Fig. 1: schematisch eine perspektivische Vorderansicht eines erfindungsgemäßen Trägerbauteils,
- Fig. 2: schematisch einen Scheinwerfer, insbesondere Nebelscheinwerfer, mit Halteelementen,
- Fig. 3: schematisch eine Rückansicht des erfindungsgemäßen Trägerbauteils gemäß Figur 1 mit einer zu einer Form eines Scheinwerfers korrespondierenden Öffnung, und
- Fig. 4: schematisch einen Ausschnitt einer Stoßfängereinheit mit einem erfindungsgemäßen Trägerbauteil.

Einander entsprechende Teile sind in allen Figuren mit den gleichen Bezugszeichen versehen.

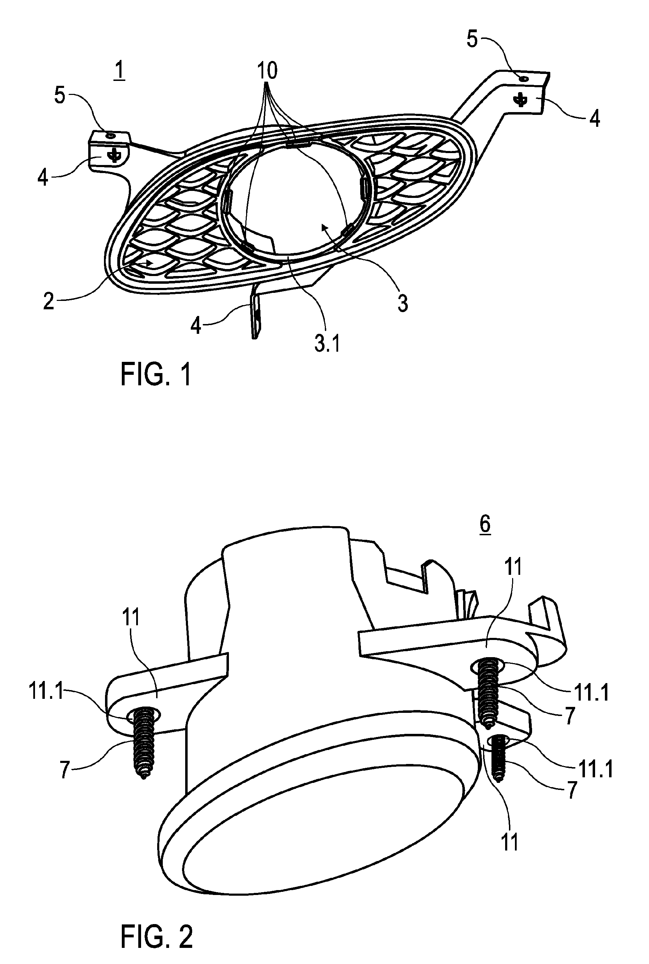

In Figur 1 ist eine erfindungsgemäße Befestigungsvorrichtung mit einem Trägerbauteil 1 dargestellt. Die Befestigungsvorrichtung dient insbesondere der Aufnahme mindestens eines Leuchtmittels, z. B. eines Scheinwerfers und/oder einer Funktionsleuchte. Das Trägerbauteil 1 (auch Abdeckung oder Blende genannt) ist insbesondere als eine Karosserieabdeckung, z. B. als ein Lufteinlassgitter, ausgebildet.

Nachfolgend wird die Erfindung anhand eines als Lufteinlassgitter ausgebildeten Trägerbauteils 1 beschrieben. Das Trägerbauteil 1 weist als Lufteinlassgitter Lufteingangsöffnungen 2 auf. Die Lufteingangsöffnungen 2 dienen beispielsweise einer Belüftung einer Bremse und/oder einer Kühlung diverser Motorkomponenten.

Erfindungsgemäß ist das Trägerbauteil 1 aus Polypropylen gebildet. Polypropylen ist ein Kunststoff der Gattung der Thermoplaste. Das Trägerbauteil 1 aus Polypropylen lässt sich bevorzugt unter anderem mittels eines Spritzgießverfahrens herstellen.

Darüber hinaus ist der Kunststoff Polypropylen einfärbbar. Dadurch entsteht ein weiterer Kostenvorteil, da auf eine aufwändige Lackierung des Trägerbauteils 1 verzichtet werden kann.

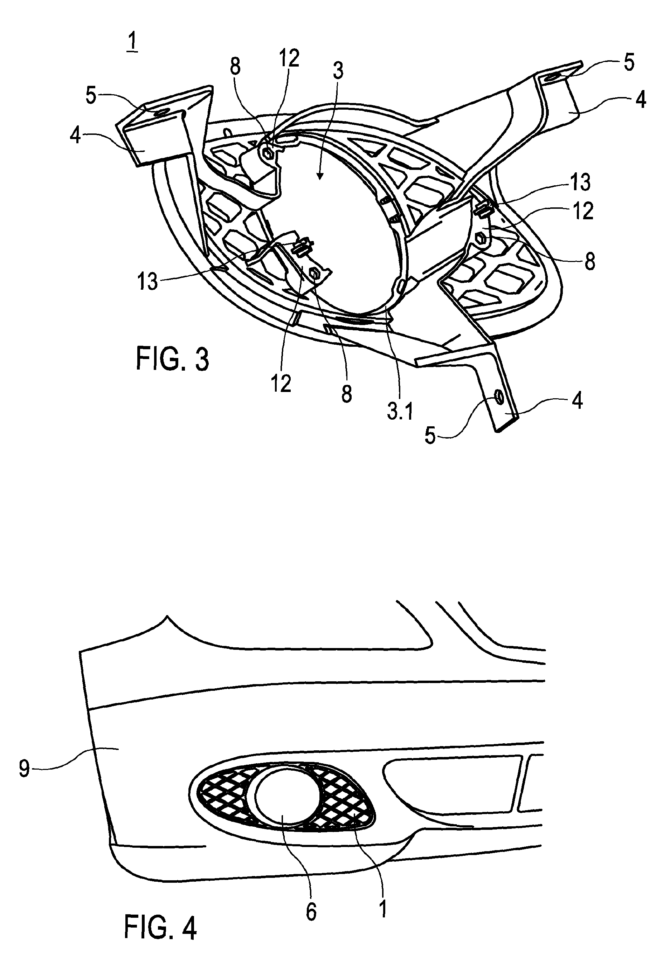

Ferner weist das Trägerbauteil 1 eine zu einer Form, insbesondere Außenkontur eines in Figur 3 gezeigten Scheinwerfers 6 oder einer Funktionsleuchte korrespondierende Öffnung 3 bzw. Einfassung auf. Dabei ist die Öffnung 3 derart ausgebildet, dass der Scheinwerfer 6 und/oder die Funktionsleuchte in einem die Öffnung 3 umgebenden Randbereich 3.1 auf einer Auflagefläche aufliegt. An der Auflagefläche können zusätzlich beispielsweise elastische Dichtlippen angespritzt sein.

Im Detail ist das Trägerbauteil 1 derart ausgebildet, dass der Scheinwerfer 6 und/oder die Funktionsleuchte besonders vorteilhaft ohne weitere Einsätze im oder am Trägerbauteil 1 direkt fixierbar, insbesondere schraubbar ist bzw. sind. Hierbei ist der Innendurchmesser des Trägerbauteils 1 zur Aufnahme des Scheinwerfers 6 gegenüber herkömmlichen PC/PBT-Kunststoffträgerbauteilen reduziert, insbesondere verengt, wodurch eine einfache und sichere sowie leichtere Aufnahme, Positionierung und Fixierung des Scheinwerfers 6 im erfindungsgemäßen Trägerbauteil 1 aus Polypropylen ermöglicht ist.

Alternativ oder zusätzlich zur Schraubenbefestigung kann das aus Polypropylen gebildete Trägerbauteil 1 derart ausgeführt sein, dass an dem Randbereich 3.1 der Öffnung 3 beispielsweise Rastelemente 10 angeformt sind, die in die Fassung des Scheinwerfers 6 und/oder der Funktionsleuchte eingreifen. Darüber hinaus können Clipse sowohl an dem Trägerbauteil 1 als auch an dem Scheinwerfer 6 und/oder der Funktionsleuchte angeordnet sein, worüber eine Befestigung realisierbar ist.

Durch die Ausbildung des Trägerbauteils 1 aus Polypropylen reduziert sich vorteilhaft ein Gesamtgewicht einer in Figur 4 dargestellten Stoßfängereinheit 9, an welcher das Trägerbauteil 1 befestigbar ist.

Zur Befestigung des Trägerbauteils 1 an der Stoßfängereinheit 9 sind an dem Trägerbauteil 1 beispielsweise flanschförmige Ansatzelemente 4 angeformt. Dabei sind die Ansatzelemente 4 mit Aussparungen 5, beispielsweise Bohrungen, versehen, in welche Befestigungsmittel, wie z. B. Schrauben oder Nieten, eingreifen.

In Figur 2 ist ein Ausführungsbeispiel für einen in das Trägerbauteil 1 nach Figur 1 einsetzbaren Scheinwerfer 6, insbesondere ein Nebelscheinwerfer dargestellt.

Der Scheinwerfer 6 weist zur Befestigung an dem Trägerbauteil 1 Anschlagelemente 11 auf, welche mit Bohrungen 11.1 zur Aufnahme von Halteelemente 7 beispielsweise in Form von Schrauben oder Nieten versehen ist.

Figur 3 zeigt eine Rückansicht des erfindungsgemäßen Trägerbauteils 1. Hierbei weist das aus Polypropylen gebildete Trägerbauteil 1 zu den in Figur 2 dargestellten Anschlagelementen 11 des in die Öffnung 3 einsetzbaren Scheinwerfers 6 korrespondierende Stegflächen 12 auf, welche jeweils mit mindestens einer Bohrung 8 versehen sind, in die korrespondierende Halteelemente 7 des Scheinwerfers 6 eingreifen. Die Halteelemente 7 des Scheinwerfers 6, z. B. Schrauben, sind in diese Bohrungen 8 einführbar und werden verschraubt, so dass der Scheinwerfer 6 direkt am Trägerbauteil 1 lösbar befestigbar ist.

Zur Positionierung des Scheinwerfers 6 in der Öffnung 3 des Trägerbauteils 1 kann mindestens einer der Stegflächen 12 oder mehrere mit Führungselementen 13, z. B. Führungsstiften versehen sein.

Figur 4 zeigt einen Ausschnitt der Stoßfängereinheit 9 eines Fahrzeuges, an der das Trägerbauteil 1 über die Ansatzelemente 4 befestigt ist. Das aus Polypropylen gebildete Trägerbauteil 1 kann beispielsweise eingefärbt sein und weist vorzugsweise die Einfärbung der Stoßfängereinheit 9 auf.

In die Öffnung 3 ist der Scheinwerfer 6, insbesondere Nebelscheinwerfer, eingeführt, welcher an dem Trägerbauteil 1 direkt und ohne weitere Einsätze befestigbar ist. Das Trägerbauteil 1 ist mittels der angeformten Ansatzelemente 4 mit den Aussparungen 5 an der Stoßfängereinheit 9 befestigt, z. B. geschraubt, genietet oder geclipst.

## Patentansprüche

1. Befestigungsvorrichtung für einen Scheinwerfer (6) und/oder eine Funktionsleuchte, insbesondere Nebelscheinwerfer und/oder Richtungsanzeiger eines Fahrzeuges, umfassend ein Trägerbauteil (1),
**dadurch gekennzeichnet, dass** das Trägerbauteil (1) aus Polypropylen gebildet ist.

2. Befestigungsvorrichtung nach Anspruch 1,
**dadurch gekennzeichnet, dass** das Trägerbauteil (1) als ein Form-, insbesondere Spritzguss-, Blasform- oder Extrudierbauteil ausgebildet ist.

3. Befestigungsvorrichtung nach Anspruch 1 oder 2,
**dadurch gekennzeichnet, dass** das Trägerbauteil (1) eingefärbt ausgebildet ist.

4. Befestigungsvorrichtung nach einem der Ansprüche 1 bis 3,
**dadurch gekennzeichnet, dass** das Trägerbauteil (1) eine zu einer Form des Scheinwerfers (6) und/oder der Funktionsleuchte korrespondierende Öffnung (3) aufweist.

5. Befestigungsvorrichtung nach einem der Ansprüche 1 bis 4,
**dadurch gekennzeichnet, dass** der Scheinwerfer (6) und/oder die Funktionsleuchte mittels Halteelementen (7) an dem Trägerbauteil (1) befestigbar ist.

6. Befestigungsvorrichtung nach einem der Ansprüche 1 bis 5,
**dadurch gekennzeichnet, dass** das Trägerbauteil (1) ein Lufteinlassgitter ist.

7. Befestigungsvorrichtung nach Anspruch 6,
**dadurch gekennzeichnet, dass** das als Lufteinlassgitter ausgebildete Trägerbauteil (1) in eine Stoßfängereinheit (9) integrierbar ist.
